# EUROPEAN PATENT APPLICATION

(11) **EP 1 905 980 A2**
(43) Date of publication of application: **02.04.2008**
(21) Application number: 07018870.1
(22) Date of filing: 25.09.2007
(51) Int. Cl.: F02B 39/14, F01D 25/18, F02C 6/12

(54) **Supercharger**

(30) Priority: 28.09.2006 JP 2006265723
(71) Applicant: JTEKT Corporation, Osaka-shi Osaka 542-8502 (JP)
(72) Inventor: Ueno, Hiroshi, Osaka-shi Osaka 542-8502 (JP); Shiraki, Toshihiko, Osaka-shi Osaka 542-8502 (JP); Oshima, Akio, Osaka-shi Osaka 542-8502 (JP); Nakashita, Tomonori, Osaka-shi Osaka 542-8502 (JP); Ohtsuki, Masaaki, Osaka-shi Osaka 542-8502 (JP); Bando, Shigenori, Osaka-shi Osaka 542-8502 (JP); Abe, Masaki, Osaka-shi Osaka 542-8502 (JP); Nakata, Ryuji, Osaka-shi Osaka 542-8502 (JP); Kida, Takehisa, Osaka-shi Osaka 542-8502 (JP)
(74) Representative: Schaeberle, Steffen

(57) **Abstract**

A supercharger includes a housing (40) and a turbine shaft supported by the center hole (43) within the housing (40) through rolling bearings (10A,10B). A cooling water jacket (26) within the housing (40) is provided within the main body portion (40B) of the housing (40). The rolling bearings (10A,10B) are supplied with lubricant by a tank portion (35) formed within the housing (40) for reserving the lubricant and a wick member (36) provided between the tank portion (35) and the center hole (43). The wick member (36) includes a core portion (37) configured by a fiber portion (37a) and gaps (37b). The lubricant is supplied by the capillary action of the gaps (37B). The porosity of the gap (37B) is set to be 45.5 % or more and less than 80 %.

## Description

### BACKGROUND OF THE INVENTION

The present invention relates to a supercharger.

In an automobile, a supercharger has been widely used since it can further improve the efficiency of an engine. The supercharger includes a housing and a turbine shaft which is supported via bearings at the center hole within the housing. In the related art, the bearings of such a supercharger are supplied with engine oil and so lubricated. Thus, as shown in JP-A-5-141259 and JP-A-10-19045, many holes serving as flow paths of engine oil are formed within the small housing of the supercharger.

As described above, the supercharger described in each of JP-A-5-141259 and JP-A-10-19045 is provided with many holes at the main body portion of the housing. Thus, it is difficult in view of a space to form a coolant flow path at the main body portion of the small housing for cooling the supercharger. Further, a coolant jacket can be provided only at a part of the main body portion. Thus, there arises a problem that since the cooling effect of the coolant is small, the temperature of the bearings becomes high and so seizure likely occurs. Further, there is another problem that the aforesaid hole can not adjust an amount of the oil supplied to the bearing.

Further, in the supercharger described in each of JP-A-5-141259 and JP-A-10-19045, engine oil polluted by contaminating material such as carbon sludge generatedon the engine side is supplied to the bearing. Thus, in particular, when the bearing is a rolling bearing, the seizure may occur when the contaminating material enters into the rolling bearing. In view of this fact, there has been proposed an idea for removing the contaminating material such as the provision of a filter on the way of the flow path of the engine oil within the supercharger. However, even in this case, the contaminating material can not be removed completely.

### SUMMARY OF THE INVENTION

Thus, the invention has been made in view of the aforesaid problems, and an object of the invention is to provide a supercharger which has a structure for providing cooling effects and supplies a suitable amount of lubricant having no contaminating material thereby to prevent the seizure of a rolling bearing.

In order to attain the aforesaid object, the supercharger according to the invention comprising:
a housing including a center hole;
a cooling water jacket provided within a main body portion of the housing;
a turbine shaft that is supported through a rolling bearing by the center hole of the housing and provided at one end thereof with a turbine existing outside of the housing in an axial direction thereof;
a tank portion that reserves lubricant for the rolling bearing and is formed within the housing; and
a wick member provided between the tank portion and the center hole,
wherein the wick member includes a core portion configured by a fiber portion formed by a plenty of plastics fibers and gaps existing among the fibers, the lubricant is supplied by capillary action of the gaps from the tank portion to the center hole, and porosity representing a ratio of the gaps at the core portion is set to be 45.5 % or more and less than 80 %.

According to this configuration, since the lubricant is supplied from the tank portion formed within the housing, it is not necessary to provide a flow path for receiving the lubricant supplied from the outside. Thus, the cooling water jacket can be provided within the main body portion of the housing.
Accordingly, since the cooling water jacket can provide the cooling effects, the rolling bearings within the hosing are cooled and so the seizure of the rolling bearings can be suppressed. Further, since the lubricant for the rolling bearings is supplied from the tank portion within the housing, unlike the related art, there does not arise a phenomenon that the lubricant is polluted by a cause at the outside of the supercharger such as carbon sludge generated on the engine side. Thus, it is possible to prevent the seizure which is caused by the mixing of foreign material within the lubricant into the rolling bearings. Furthermore, when the porosity of the wick member is set to be 45.5 % or more and less than 80 %, the minimum amount of the lubricant not causing the seizure can be surely supplied by the capillary action, whereby the seizure can be prevented. In this case, when the porosity is 80 % or more, the shape of the wick member can not he held since the ratio of the gaps is too large. In contrast, when the porosity is less than 45.5 %, the seizure may occur at the bearing since the supply amount of the lubricant is small.

In this supercharger, the porosity is 65 % or more and less than 80 %, preferably. When the porosity is set in this range, the minimum amount of the lubricant not causing the seizure can be stably supplied.

According to the invention, since the rolling bearing of the supercharger can be cooled and a suitable amount of the lubricant having no contaminating material can be supplied, the seizure of the rolling bearing can be prevented.

### BRIEF DESCRIPTION OF THE DRAWINGS

Fig. 1 is a sectional diagram showing an embodiment of a supercharger according to the invention.
Fig. 2 is a sectional diagram showing rolling bearing provided at the supercharger shown in Fig. 1.
Fig. 3 is a schematic diagram showing the section of a wick member provided at the supercharger shown in Fig. 1.
Fig. 4 is a diagram showing the results of seizure tests of the bearings.
Fig. 5 is a diagram showing the results of soak-up tests of the wick member.

### DETAILED DESCRIPTION OF PREFERRED EMBODIMENTS

Hereinafter, embodiments of the invention will be explained with reference to drawings.

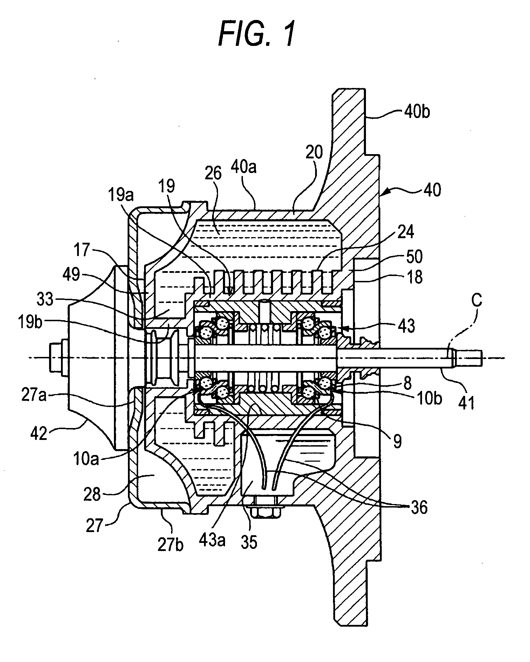

Fig. 1 is a sectional diagram showing a supercharger according to an embodiment of the invention. The supercharger includes a housing 40 and a turbine shaft 41 supported by the housing 40 through rolling bearings 10a, 10b within the housing 40. A turbine 42 located outside of the housing 40 in the axial direction thereof is provided at the one end portion of the turbine shaft 41. A compressor (not shown) is provided at the other end portion of the turbine shaft on the opposite side of the one end portion. The supercharger is arranged for the engine of an automobile. A pair of the rolling bearings 10a and a pair of the rolling bearings 10b are provided separately along a shaft line C direction.

The housing 40 includes a main body portion 40a having an outer periphery of a cylindrical shape and a flange portion 40b extending outward in the radial direction from the outer peripheral portion of the other end portion 50 of the main body portion 40a. The main body portion 40a has a center hole 43 at the radially center portion thereof. The center hole 43 is formed as a circular hole around the shaft line C. A pair of the rolling bearings 10a, 10b are provided at the center hole 43. The turbine shaft 41 is supported so as to be rotatable around the shaft line C by these rolling bearings 10a, 10b.

The main body portion 40a of the housing 40 has a cooling water jacket 26 therein. The cooling water jacket 26 is provided within the main body portion 40a so as to extend from the one end portion 49 in the axial direction to the other end portion 50. To be concrete, the cooling water jacket 26 is configured in a range from the inner surface of the side wall 17 on the one end portion 49 side of the main body portion 40a to the inner surface of the side wall 18 on the other end portion 50 side, in the axial direction. The size of the jacket in the axial direction is made larger than the center hole 43. In this manner, the cooling water jacket 26 exists so as to extend to the radially outside positions of the pair of the rolling bearings 10a, 10b.

The cooling water jacket 26 has, in the peripheral direction of the main body portion 40a, a continuously annular portion in the peripheral direction at a radially outward position of the one rolling bearings 10a on the turbine 42 side and a position on the turbine 42 side. A tank portion 35 reserving lubricant to be supplied to the rolling bearings 10a, 10b is formed at a portion of the radially outward position of the other rolling bearings 10b, that is, at the inner portion of the lower portion on the other end portion 50 side of the main body portion 40a.
In this manner, the cooling water jacket 26 is configured to surround the axial and peripheral directions of the center hole 43 except for a part where the potion 35 exists.

Further, the cooling water jacket 26 is formed as a space portion surrounded by the annular side wall 17 on the one end portion 49 side of the main body portion 40a, a part of the annular side wall 18 on the other end portion 50 side, an inside peripheral wall 19 forming the center hole 43 and an outside peripheral wall 20 at the outer periphery of the main body portion 40a. Coolant for cooling exists within the space portion, whereby the rolling bearings 10a and 10b can be cooled. A plurality of fins 24 protruding in the radially outward direction are formed at the inside peripheral wall 19 thereby to improve the cooling function for the rolling bearings 10a, 10b. The inside peripheral wall 19 has a large-diameter cylindrical portion 19a forming the pouter peripheral surface of the center hole 43 and a small-diameter cylindrical portion 19b which continues axially from the large-diameter cylindrical portion 19a to the one end portion 49 side via a step portion and has a diameter smaller than that of the large-diameter cylindrical portion 19a.

Further, the cooling water jacket 26 has a portion exiting between the turbine 42 and the rolling bearings 10a within the main body portion 40a. To be concrete, on the one end portion 49 side of the main body portion 40a, the cooling water jacket 26 has a portion protruding radially inward from the inner peripheral surface 43a of the center hole 43. This portion is formed as an annular portion 33. The annular portion 33 has an inner peripheral surface formed by the small-diameter cylindrical portion 19b and a die wall formed by the inner peripheral side portion of the side wall 17. According to this configuration, since the annular portion 33 exists between the turbine 42 and the rolling bearings 10a in the axial direction, heat can be effectively removed from the turbine 42 side by the coolant of the annular portion 33, whereby the temperature at the rolling bearings 10a near the turbine 42 can be suppressed from increasing, particularly.

Further, the supercharger includes a heat shielding member 27 provided between the turbine 42 and the housing 40. The heat shielding member 27 is made of ceramics or metal, and has an annular portion 27a existing between the side wall 17 and the turbine 42 and a cylindrical portion 27b extending from the annular portion 27a to the hosing 40 side. The base end portion (turbine shaft 41) is inserted into the center hole of the annular portion 27a, and a small gap is formed between this hole and the base end portion of the turbine 42. The end portion of the cylindrical portion 27b contacts with the outer peripheral portion of the main body portion 40a of the housing 40. Thus, an annular air chamber 28 is formed between the side wall 17 of the housing 40 and the annular portion 27a, the cylindrical portion 27b of the heat shielding member 27. According to this configuration, radiant heat and air-conduction heat from the turbine 42 side is shielded by the heat shielding member 27, whereby the temperature increase of the housing 40 and the rolling bearings 10a, 10b due to such heat can be suppressed. Further, since the heat from the turbine 42 side becomes more hardly transmitted to the housing 40 due to the air chamber 28 between the heat shielding member 27 and the housing 40, the temperature increase of the housing 40 and the rolling bearings 10a, 10b can be suppressed.

Next, the explanation will be made as to the rolling bearings 10a, 10b provided at the supercharger. The pair of the rolling bearings 10a, 10b (hereinafter merely called as the rolling bearings 10) are same.

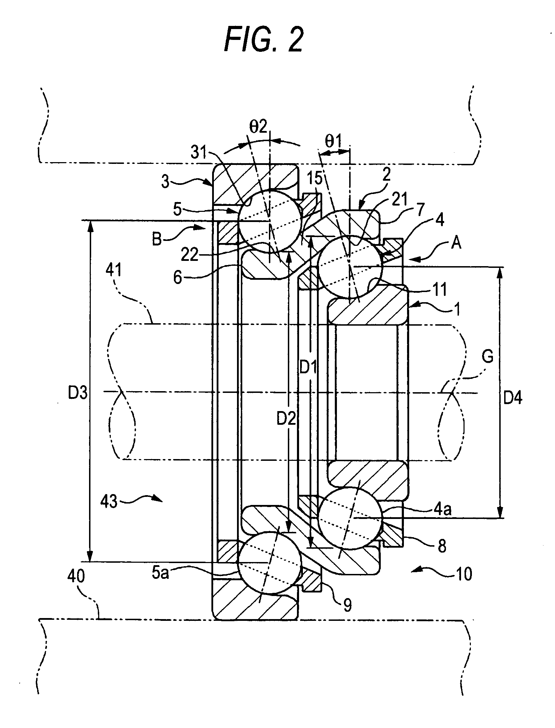

In Fig. 2, the rolling bearing 10 is provided with a single inner ring 1 fitted on the outer periphery of the turbine shaft 41, a single outer ring 3 fixed to the inner periphery of the center hole 43 of the housing 40 and a signal intermediate ring 2 disposed between the inner ring 1 and the outer ring 3. The inner ring 1, the intermediate ring 2 and the outer ring 3 are disposed in this order in a positionally shifted manner along the shaft line C. The rolling bearing further includes a line of first rolling element 4 provided in an annular space between the inner ring 1 and the intermediate ring 2 so as to be rotatable freely and a line of second rolling element 5 provided in an annular space between the intermediate ring 2 and the outer ring 3 so as to be rotatable freely.

Each of the first rolling element 4 and the second rolling element 5 is configured by a plurality of balls. A plurality of balls 4a of the first rolling element 4 are held by a cage 8 along a circle around the shaft line C. A plurality of balls 5a of the second rolling element 5 are held by a cage 9 along another circle around the shaft line C. Each of the balls 4a and 5a has the same diameter.

The inner ring 1 is formed by an annular member and the inner peripheral surface thereof is formed as a surface fitting with the turbine shaft 41. A first raceway 11 contacting with the balls 4a of the first rolling element 4 is formed at the outer peripheral surface of the inner ring.
The outer ring 3 is formed by an annular member and the outer peripheral surface thereof is formed as a surface fitting with the center hole 43 of the housing 40. A second raceway 31 contacting with the balls 5a of the second rolling element 5 is formed at the inner peripheral surface of the outer ring. The axial size of the inner ring 1 is made almost same as that of the outer ring 3.

The intermediate ring 2 is formed by an annular member and the axial size thereof is made longer than those of the inner ring 1 and the outer ring 3. A third raceway 21 contracting with the balls 4a of the first rolling element 4 is formed at a part of the inner peripheral surface of the intermediate ring 2, and a fourth raceway 22 contracting with the balls 5a of the second rolling element 5 is formed at a part of the outer peripheral surface of the intermediate ring 2. The inner ring 1, the intermediate ring 2 and the outer ring 3 are disposed concentrically around the shaft line C in a manner of positionally deviated in the shaft line C direction from one another.

The intermediate ring 2 include an annular large-diameter ring portion 7 and an annular small-diameter ring portion 6 which is provided so as to continue from the large-diameter ring portion 7 via a slanted ring portion 15. The small-diameter ring portion 6 is arranged to have the diameter of the outer peripheral surface thereof smaller than that of the large-diameter ring portion 7. The slanted ring portion 15 extends linearly in an inclined direction with respect to the shaft line C. The large-diameter ring portion 7 is provided in the radially outward direction of the inner ring 1 via the first rolling element 4. The outer ring 3 is provided via the second rolling element 5 in the radially outward direction of the small-diameter ring portion 6 which continues via a slanted ring portion 15 in the shaft line C direction of the large-diameter ring portion 7. Thus, the outer ring 3 can be made to have a small diameter, whereby the rolling bearing 10 is prevented from being largely protruded in the radial direction.

The annular third raceway 21 is formed at a boundary portion between the inner peripheral surface of the large-diameter ring portion 7 and the inner peripheral surface of the slanted ring portion 15. The annular fourth raceway 22 is formed at a boundary portion between the outer peripheral surface of the small-diameter ring portion 6 and the outer peripheral surface of the slanted ring portion 15. The intermediate ring 2 is configured in a bent shape in its sectional view.

In the intermediate ring 2, the pitch D3 of the second rolling element 5 contacting with the fourth raceway 22 is made larger than the pitch D4 of the first rolling element 4 contacting with the third raceway 21. Thus, the first and second rolling elements 4, 5 can be disposed in adjacent to each other in the shaft line C direction in a manner of sandwiching the slanted ring portion 15 of the intermediate ring 2 therebetween, whereby the size of the rolling bearing 10 in the shaft line C direction can be made small. The pitch means the diameter of the circle passing through the center of the balls of the rolling element.

Further, the balls 4a of the first rolling element 4 are made in an angular-contact with a pair of the first raceway 11 and the third raceway 21 opposing to each other, and the balls 5a of the second rolling element 5 are made in an angular-contact with a pair of the fourth raceway 22 and the second raceway 31 opposing to each other. The contact angle θ1 of the first rolling element is same as the contact angle θ2 of the second rolling element. For example, the contact angle is set to 15 degree in Fig. 2. Thus, the rolling bearing 10 can receive a load (axial load) from the shaft line C direction. Further, since the rolling bearing 10 is disposed so as to extend in the shaft line C direction, the rolling bearing is configured to have damper efficiency in the axial direction.

The intermediate ring 2 has a structure suitable for the angular contact of the rolling elements 4, 5. In the outerperiphery of the intermediate ring 2, since the fourth raceway 22 is formed at the boundary portion between the small-diameter ring portion 6 and the slanted ring portion 15, the shoulder diameter of the slanted ring portion 15 at the shoulder portions on the both sides of the fourth raceway 22 is larger than the shoulder portion of the small-diameter ring portion 6. Thus, in the fourth raceway 22, an angular-contact raceway can be formed by using the slope of the slanted ring portion 15. Further, since the third raceway 21 is formed at the boundary portion between the large-diameter ring portion 7 and the slanted ring portion 15, the shoulder diameter of the slanted ring portion 15 at the shoulder portions on the both sides of the third raceway 21 is smaller than the shoulder portion of the large-diameter ring portion 7. Thus, in the third raceway 21, an angular-contact raceway can be formed by using the slope of the slanted ring portion 15.
In this manner, in each of the inner ring 1 and the outer ring 3, the one shoulder side thereof is required to be made thicker in order to make the rolling elements 4 and 5 angular-contact. In contrast, in the intermediate ring 2, it is not required to make the one shoulder side (slanted ring portion 15) thereof be thicker in order to make the rolling elements 4 and 5 angular-contact. Thus, since the configuration of the intermediate ring 2 can be made simple, the intermediate ring 2 can be manufactured simply by plastically deforming a cylinder having the constant thickness.

Further, in the intermediate ring 2, although the small-diameter ring portion 6 is made smaller in its diameter than that of the large-diameter ring portion 7 as described above, the raceway diameter D2 of the fourth raceway 22 on the small-diameter ring portion 6 side is made smaller than the diameter D1 of the third raceway 21 of the large-diameter ring portion 7 (D2 < D1). The raceway diameter D2 of the fourth raceway 22 is set to the diameter of the minimum diameter portion of the fourth raceway 22, while the raceway diameter D1 of the fourth raceway 22 is set to the diameter of the maximum diameter portion of the third raceway 21.

According to the aforesaid configuration, the balls 4a of the first rolling element 4 are disposed so as to be rotatable freely between the pair of the first raceway 11 and the third raceway 21 opposed to each otherbetween the inner ring 1 and the intermediate ring 2, whilst the balls 5a of the second rolling element 5 are disposed so as to be rotatable freely between the pair of the fourth raceway 22 and the second raceway 31 opposed to each other between the intermediate ring 2 and the outer ring 3. The rolling bearing 10 is configured in a manner that a plurality (two stages) of rolling elements 4, 5 are provided between the inner ring 1 fitted on the outer periphery of the turbine shaft 41 and the outer ring 3 fixed to the housing 40. That is, according to the rolling bearing 10, the inner ring 1, the first rolling element 4 and the intermediate ring 2 constitute a first bearing portion A in which the intermediate ring 2 is regarded as the outer ring, and the intermediate ring 2, the second rolling element 5 and the outer ring 3 constitute a second bearing portion B in which the intermediate ring 2 is regarded as the inner ring.

According to the rolling bearing 10 configured in the afore said manner, when the turbine shaft 41 rotates at a predetermined rotation speed, the inner ring 1 is placed in a state of rotating at the predetermined rotation speed with respect to the outer ring 3 in the rolling bearing 10. In the rotating state, the predetermined rotation speed is distributed by the two stages of the first and second bearing portions A, B. That is, although the inner ring 1 rotates integrally together with the turbine shaft 41, the intermediate ring 2 rotates in a delayed (decelerated) manner with respect to the inner ring 1. Thus, the rotation speed at the bearing portions are reduced from the predetermined rotation speed at ever stage. To be explained concretely, when the turbine shaft 41 rotates at 200,000 rpm, for example, the first bearing portion A on the turbine shaft 41 side (inside) rotates at 150, 000 rpm, whilst the second bearing portion B on the housing 40 side (outside) rotates at 40, 000 rpm which is lower than the speed of the first bearing portion A. The rotation speeds respectively distributed to the bearing portions A, B configured in amulti-stage are changed automatically in accordance with the change of the rotation speed of the turbine shaft 41 (inner ring 1). In this case, the rotation speed of the second bearing portion B on the outer ring 3 side is set to be lower than that of the first bearing portion A on the inner ring 1 side, and the rotation speeds of the bearing portions A and B are distributed at a predetermined ratio.

In the intermediate ring 2 of the rolling bearing 10, the fourth raceway 22 is formed at the outer peripheral surface of the boundary portion between the slanted ring portion 15 and the small-diameter ring portion 6 which diameter is made smaller than that of the large-diameter ring portion 7. Thus, since the second rolling element 5 made in contact with the fourth raceway 22 at the boundary portion between the small-diameter ring portion 6 and the slanted ring portion 15 is provided at the radially inside portion, the size of the rolling bearing 10 in the radial direction can be made small. That is, the diameter of the outer periphery of the outer ring 3 can be made small. Thus, in Fig. 1, the inner diameter of the center hole 43 of the housing 40 which houses and fixes the rolling bearings 10a, 10b therein can be made small. As a result, the volume of the cooling water jacket 26 provided within the housing 40 can be made large.

Further, in the supercharger, the lubricant for the rolling bearings 10a, 10b is supplied from the tank portion 35 to the center hole 43 by means of the capillary action (capillarity) of a wick member 36 provided between the center hole 43 and the tank portion 35 which is formed within the housing 40 and reserves the lubricant therein. That is, the supercharger has a lubrication configuration where the lubricant for the rolling bearings 10a, 10b exists only within the housing 40. Since the lubricant is supplied from the tank portion 35 within the housing 40, unlike the related art, there does not arise a phenomenon that the lubricant is polluted by a cause at the outside of the supercharger such as carbon sludge generated on the engine side. Thus, since foreign material (contaminating material) within the engine oil is not supplied to the rolling bearings 10a, 10b, the main cause of the failure of the supercharger can be removed and so the maintenance-free supercharger can be provided.

The tank portion 35 is configured by a space portion formed by a part of the lower portion within the main body portion 40a. The lubricant of the tank portion 35 is supplied to the center hole 43 by the wick member 36 and used for the lubrication of the rolling bearings 10a, 10b within the center hole 43. As the lubricant reserved within the tank portion, it is possible to use lubricant which is usually used for the lubrication of the rolling bearings 10a, 10b and has viscosity capable of penetrating into the wick member 36. Among various kinds of lubricant, there are preferably used chemical synthetic material more excellent in seizure-resistance property than the engine oil, such as polyol ester oil, diester oil, aromatic ester oil, composite hydrocarbon oil, ether oil, silicon oil, fluorine oil.

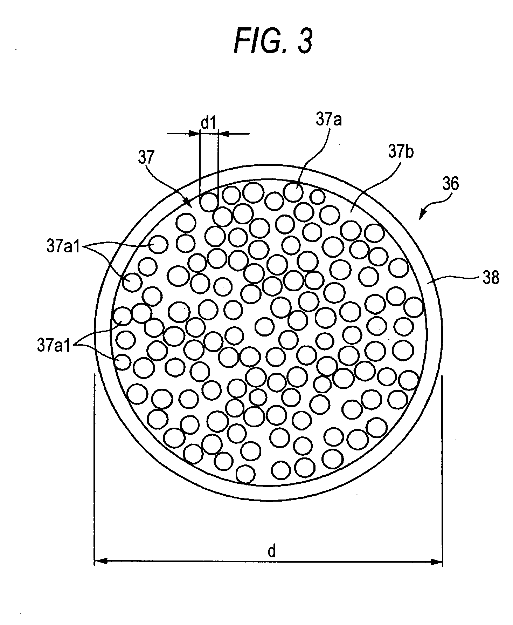

The wick member 36 is provided between the tank portion 35 and the center hole 43 and supplies the lubricant from the tank portion 35 to the center hole 43 by the capillary action. The one end of the wick member is dipped into the lubricant within the tank portion 35 and the other end thereof is disposed at the rolling bearing 10 of within the center hole 43. The sectional view of the wick member 36 is schematically shown in Fig. 3 and the wick member is configured by a core portion 37 and a cover portion 38 covering the outer periphery of the core portion 37.
The diameter (line diameter) d of the wick member is in a range of 2.1 to 2.3 mmϕ. The core portion 37 has a fiber portion 37a formed by many plastic fibers 37al and gaps 37b existing among the fibers 37al.

The fiber portion 37a may contain the fibers 37al each having the fiber diameter d1 in a range of 3 to 20D (denier) (in a rage from 0.014 to 0.090 mmϕ) in a fiber density in a range of 90 to 1, 270 per mm². Plastics as the material of the fiber 37al may be nylon, polyacetal (POM), polyethylene terephthalate (PET), polyether ether ketone (PEEK) etc. In this case, the fiber made of polyethylene terephthalate (PET) having the fiber diameter dl of 5D (denier) (0.023 mmϕ) is used. The line diameter d of the fiber is set to 2.1 mmϕ and the fiber density thereof is set to 550 per mm².
The gap 37b existing at the core portion 37 serves to soak up the lubricant (capillary action), and so the supply amount of the lubricant can be changed by adjusting the ratio (porosity) of the gaps 37b of the core portion 37. In order to supply the minimum amount of the lubricant not causing the seizure, the porosity is required to be set to be 45.5 % or more and less than 80%, preferably, 65 % or more and less than 80%. In this case, the porosity is set to 65.0 %.
The cover portion 38 is configured by binder such as urethane and is formed by melting the binder provided around the core portion 37 by heat.

By employing the wick member 36 thus configured, the minimum amount of the lubricant not causing the seizure can be surely supplied within the center hole 43 by the capillary action without being leaked. Thus, since an amount of the lubricant being used can be reduced, the running cost can be reduced. The low torque caused by reducing a consumed amount of the lubricant results in the improvement of the fuel cost of the engine and further results in the improvement of the response of the supercharger itself, whereby the turbo lag can be eliminated. Further, according to the wick member 36, since the lubricant is supplied by the capillary action without using any motive power, the lubricant can be supplied to the rolling bearing 10 at the center hole 43 even in a state where the rotating operation of the turbine shaft 41 stops.

According to the supercharger thus configured, since the lubricant is supplied from the tank portion 35 formed within the housing 40, it is not necessary to provide a flowpath for receiving the lubricant supplied from the outside. Thus, the cooling water jacket 26 can be provided within the main body portion 40a of the housing 40. Accordingly, since the cooling water jacket 26 can provide the cooling effects, the rolling bearings 10a and 10b within the hosing 40 are cooled and so the seizure of the rolling bearings 10a and 10b can be suppressed. Further, since the lubricant for the rolling bearings 10a and 10b is supplied from the tank portion 35 within the housing 40, unlike the related art, there does not arise the phenomenon that the lubricant is polluted by the cause at the outside of the supercharger such as carbon sludge generated on the engine side. Thus, it is possible to prevent the seizure which is caused by the mixing of the foreign material within the lubricant into the rolling bearings 10a and 10b. Furthermore, since the porosity of the wick member 36 is set to 65 %, the minimum amount of the lubricant not causing the seizure can be stably supplied by the capillary action without increasing the bearing torque due to the excessive supply of the lubricant, whereby the seizure can be prevented.

The supercharger according to the invention is not limited to the mode shown in the drawings and may be another mode within the scope of the invention. For example, as the material of the fibers 37al of the wick member 36, instead of PET, suitable plastics material may be selected in accordance with the using temperature of the supercharger. Also, the porosity, the diameter of the fiber and the density of the fiber may be suitable changed. Although, the binder is used as the cover portion 38 in the aforesaid embodiment, the binder is not necessarily used and the cover portion 38 may be formed by melting the outer periphery of the fiber portion 37a by heat and solidifying the outer periphery. The rolling bearing 10 is not limited to the mode shown in the drawings and may be another mode. For example, the rolling bearing may be configured so as to have two or more intermediate rings. In this case, the rotation speed at each of the bearing portions is further reduced and so the rolling bearing adapted to the higher speed can be obtained.

### Example

### 1. Seizure test of the bearing

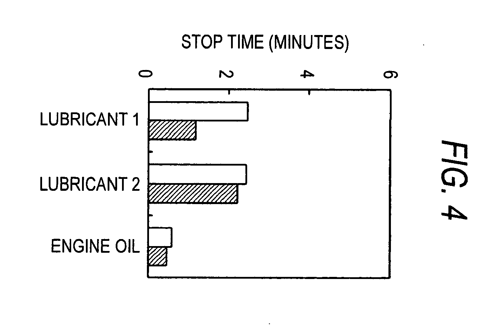

In order to determine the supply amount of the lubricant for avoiding the seizure of the bearing, the seizure tests of the bearing were made by using the aromatic ester oil and the currently used engine oil (Mobile special 10W-30 (trade name) fabricated by Exxon Mobil Corporation), respectively, and the seizure properties of these lubricant were compared. As the aromatic ester oil, two kinds of lubricant, that is, model No. T-45 fabricated by Sato Special Oil Co. Ltd. (hereinafter referred to lubricant 1) and model No. T08-NB fabricated by Sato Special Oil Co. Ltd. (hereinafter referred to lubricant 2) were used. The physical values of the respective lubricant are shown in a table 1. The seizure test was made under the condition of the bearing type No. 608, 170 centigrade x 100,000 rpm and the deposition of 0.01 cc (n = 2). The test result is shown in Fig. 4.

**Table 1**

| | | Lubricant 1 | Lubricant 2 |
|---|---|---|---|
| Viscosity | 40 centigrade | 45.7 | 90.0 |
| | 100 centigrade | 7.1 | 9.0 |
| Density (g/cm³) | | 0.985 | 0.992 |
| Pour or fluid point (centigrade) | | -51 | -45 |

From Fig. 4, it was proved that the aromatic ester oil was excellent in the seizure-resistance property than the current engine oil by a range about from twice to four times. Further, since the bearing life time per 0.01 cc of the aromatic ester oil is about two minutes, it was proved that the seizure of the bearing can be avoided with the supply amount of the lubricant of about 0.005 cc/min.

### 2. The soak-up test of the wick member

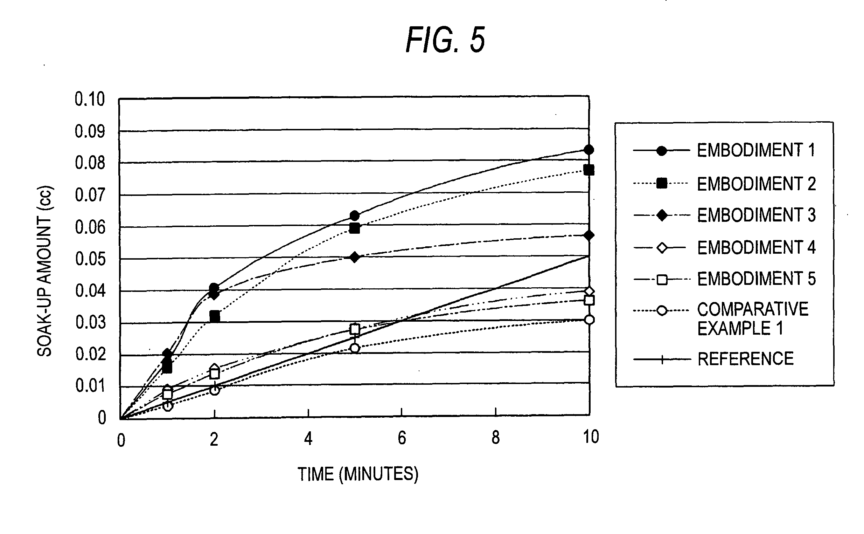

The soak-up amounts after 1, 2, 5 and 10 minutes were measured as to each of the wick members of examples 1 to 5 and a comparative example having the line diameters, the fiber diameters, the fiber densities and the porosities shown in a table 2 in a state that these wick members were stood within the lubricant almost vertically. The measurement results are shown in Fig. 5. In Fig. 5, the 0.005 cc/min obtained in the aforesaid seizure test is described as a reference line. Each of the wick members of the examples 1 to 5 and the comparative example was formed by covering the fiber made of PET with the binder (urethane).

**Table 2**

| | Line diameter (mmϕ) | Fiber diameter Denier (mmϕ) | Line density ( /mm²) | Porosity (%) |
|---|---|---|---|---|
| Example 1 | 2.1 | 5D (0.023) | 550 | 65.0 |
| Example 2 | 2.1 | 3D (0.014) | 860 | 65.5 |
| Example 3 | 2.3 | 20D (0.090) | 90 | 68.0 |
| Example 4 | 2.2 | 5D (0.023) | 780 | 46.0 |
| Example 5 | 2.2 | 3D (0.014) | 1,270 | 45.5 |
| Comparative example 1 | 2.1 | 2D (0.009) | 1,930 | 42.5 |

FromFig, 5, it was proved that thewickmembers of the examples 1 to 5 (porosity in a rage of 45.5 to 68.0 %) soaked up the lubricant exceeding the reference value (0.005 cc/min) during the test time of 5 minutes. In particular, the wick members of the examples 1 to 3 (porosity in a rage of 65.0 to 68.0 %) could soak up the lubricant exceeding the reference value (0. 005 cc/min) also during the test time of 10 minutes, and so it was proved that the lubricant can be supplied more stably.

## Claims

1. A supercharger comprising:
a housing including a center hole;
a cooling water jacket provided within a main body portion of the housing;
a turbine shaft that is supported through a rolling bearing by the center hole of the housing and provided at one end thereof with a turbine existing outside of the housing in an axial direction thereof;
a tank portion that reserves lubricant for the rolling bearing and is formed within the housing; and
a wick member provided between the tank portion and the center hole,
wherein the wick member includes a core portion configured by a fiber portion formed by a plenty of plastics fibers and gaps existing among the fibers, the lubricant is supplied by capillary action of the gaps from the tank portion to the center hole, and porosity representing a ratio of the gaps at the core portion is set to be 45.5 % or more and less than 80 %.

2. The supercharger according to claim 1, wherein the porosity is 65 % or more and less than 80 %.
